# EUROPEAN PATENT SPECIFICATION

(11) **EP 4 520 664 B1**
(45) Date of publication and mention of the grant of the patent: **28.10.2026**
(21) Application number: 24198289.1
(22) Date of filing: 03.09.2024
(51) Int. Cl.: B64D 13/06

(54) **LESS BLEED ENVIRONMENTAL CONTROL SYSTEM**
UMWELTKONTROLLSYSTEM MIT VERRINGERTEM ABLASS
SYSTÈME DE CONTRÔLE ENVIRONNEMENTAL MOINS DE SAIGNEMENT

(30) Priority: 05.09.2023 US 202318460999
(43) Date of publication of application: 12.03.2025
(73) Proprietor: Hamilton Sundstrand Corporation, Charlotte, NC 28217-4578 (US)
(72) Inventor: VIGNALI, Mark G., Simsbury (US)
(74) Representative: Dehns

(56) References cited:
- US-A1- 2016 347 456
- US-A1- 2019 135 440
- US-A1- 2022 033 086
- US-A1- 2022 242 580
- US-A1- 2022 348 334
- US-A1- 2023 105 630
- US-B2- 11 084 592

## Description

### FIELD OF INVENTION

The present invention relates generally to environmental control systems, and more particularly, to an environmental control system of an aircraft.

### BACKGROUND

In general, contemporary air condition systems are supplied a pressure at cruise that is approximately 30 psig to 35 psig. The trend in the aerospace industry today is towards systems with higher efficiency. One approach to improve airplane efficiency is to eliminate the bleed air entirely and use electrical power to compress outside air. A second approach is to use lower engine pressure. The third approach is to use the energy in the bleed air to compress outside air and bring it into the cabin. Unfortunately, each of these approaches provides limited efficiency with respect to engine fuel burn.

US 11084592 B2 discloses an environmental control system of an aircraft includes a ram air circuit including a ram air shell having at least one heat exchanger positioned therein, a dehumidification system arranged in fluid communication with the ram air circuit, and a compression device arranged in fluid communication with the ram air circuit and the dehumidification system. The compression device includes a compressor, a turbine, and a fan coupled by a shaft, wherein the fan is operable to move ram air through the ram air circuit and the turbine includes a first inlet for receiving a first flow of medium and a second inlet for receiving a second flow of medium.

US 2022242580 A1 discloses an environmental control system includes a plurality of inlets for receiving a plurality of mediums including a first medium and a second medium and an outlet for delivering a conditioned flow of the second medium to one or more loads of the aircraft. A ram air circuit includes a ram air shell having at least one heat exchanger positioned therein and a compressing device is arranged in fluid communication with the ram air circuit and the outlet. The compressing device includes a compressor and at least one turbine operably coupled via a shaft. The environmental control system is operable in a first mode and a second mode. In the second mode, a pressure of the second medium output from the compressor is equal to the pressure of the second medium provided to the outlet.

US 2023105630 A1 discloses a dual entry turbine of a compression device includes a housing having a first inlet and a second inlet, and a first outlet and a second outlet. A turbine impeller is arranged within the housing. The turbine impeller has a first gas path and a second gas path. A first flow path extends from the first inlet to the first outlet via the first gas path and a second flow path extends from the second inlet to the second outlet via the second gas path. The first flow path and the second flow path being fluidly separate from one another.

### SUMMARY

According to an aspect, an environmental control system of an aircraft is provided as claimed in claim 1.

In addition to one or more of the features described above, or as an alternative to any of the foregoing embodiments in the first mode, only a conditioned first medium is provided to an outlet of the environmental control system.

In addition to one or more of the features described above, or as an alternative to any of the foregoing embodiments in the second mode, a conditioned form of both the first medium and the second medium is provided to the outlet of the environmental control system.

In addition to one or more of the features described above, or as an alternative to any of the foregoing embodiments in the first mode, the first inlet is fluidly connected to an inlet of both the first heat exchanger and the second heat exchanger.

In addition to one or more of the features described above, or as an alternative to any of the foregoing embodiments in the first mode, the first medium output from the first heat exchanger is mixed with the first medium output from the second heat exchanger.

In addition to one or more of the features described above, or as an alternative to any of the foregoing embodiments in the second mode, the first inlet is fluidly connected to only the inlet of the second heat exchanger.

In addition to one or more of the features described above, or as an alternative to any of the foregoing embodiments the at least one turbine of the thermodynamic device includes a first turbine and a second turbine.

In addition to one or more of the features described above, or as an alternative to any of the foregoing embodiments the first turbine is fluidly connected to the second heat exchanger.

In addition to one or more of the features described above, or as an alternative to any of the foregoing embodiments the plurality of inlets includes a third inlet configured to receive a third medium and the third turbine is fluidly coupled to the third inlet.

In addition to one or more of the features described above, or as an alternative to any of the foregoing embodiments the first mode is associated with operation of the aircraft when on the ground.

In addition to one or more of the features described above, or as an alternative to any of the foregoing embodiments the second mode is associated with operation of the aircraft at altitude.

In addition to one or more of the features described above, or as an alternative to any of the foregoing embodiments the first medium is bleed air and the second medium is outside air.

According to an aspect, a method of operating an environmental control system of an aircraft is provided as claimed in claim 12.

In addition to one or more of the features described above, or as an alternative to any of the foregoing embodiments in the first mode of operation, the first medium is provided to a first heat exchanger and a second heat exchanger of the ram air circuit.

In addition to one or more of the features described above, or as an alternative to any of the foregoing embodiments in the first mode of operation, the first medium is provided to the first heat exchanger and the second heat exchanger in parallel.

In addition to one or more of the features described above, or as an alternative to any of the foregoing embodiments in the second mode of operation, the first medium is provided to only the second heat exchanger of the ram air circuit.

In addition to one or more of the features described above, or as an alternative to any of the foregoing embodiments in the second mode of operation, further comprising extracting energy from a third medium. The energy extracted from the third medium is used to drive the compressor.

### BRIEF DESCRIPTION OF THE DRAWINGS

The following descriptions should not be considered limiting in any way. With reference to the accompanying drawings, like elements are numbered alike:
FIG. 1 is a schematic diagram of an environmental control system according to an embodiment;
FIG. 2 is a schematic diagram of the environmental control system of FIG. 1 in a first mode of operation according to an embodiment; and
FIG. 3 is a schematic diagram of the environmental control system of FIG. 1 in a second mode of operation according to another embodiment.

### DETAILED DESCRIPTION

A detailed description of one or more embodiments of the disclosed apparatus and method are presented herein by way of exemplification and not limitation with reference to the Figures.

Embodiments herein provide an environmental control system of an aircraft that uses mediums from different sources to power the environmental control system and to provide cabin pressurization and cooling at a high fuel burn efficiency. The medium can generally be air, while other examples include gases, liquids, fluidized solids, or slurries.

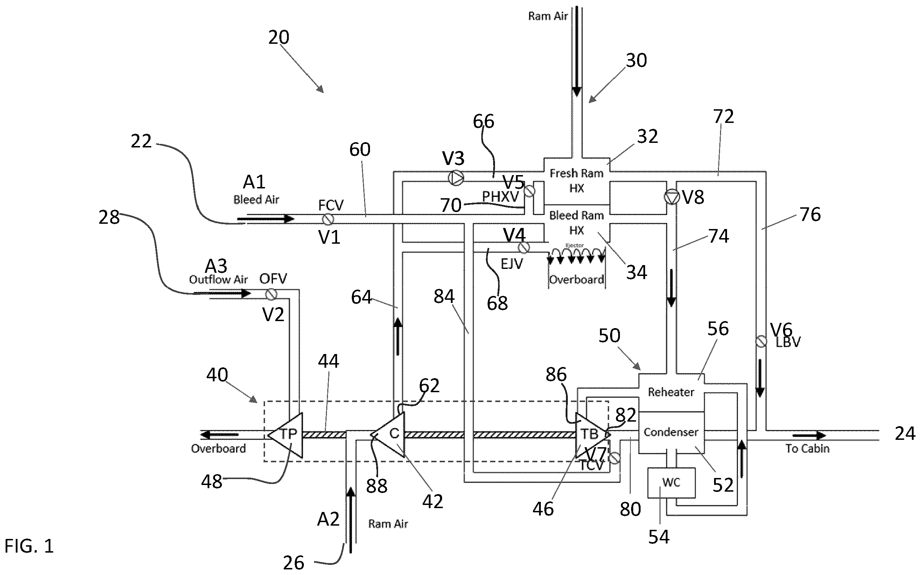

With reference now to the FIG. 1, a schematic diagram of a portion of an environment control system (ECS) 20, such as an air conditioning unit or pack for example, is depicted according to non-limiting embodiments. As shown in the figures, the system 20 is configured to receive a first medium A1 at a first inlet 22. The first inlet may be operably coupled to a volume 24, such as the cabin of an aircraft via an outlet. As will be described herein in more detail, a conditioned first medium A1 may be provided to the volume 24 during normal operation. In embodiments where the environmental control system 20 is used in an aircraft application, the first medium A1 is bleed air, which is pressurized air originating from, i.e., being "bled" from, an engine or auxiliary power unit of the aircraft. It shall be understood that one or more of the temperature, humidity, and pressure of the bleed air can vary based upon the compressor stage and revolutions per minute of the engine or auxiliary power unit from which the air is drawn.

The system 20 is also configured to receive a second medium A2 at a second inlet 26. In an embodiment, the second medium A2 is fresh air, such as outside air for example. The outside air can be procured via one or more scooping mechanisms, such as an impact scoop or a flush scoop for example. Thus, the second inlet 26 can be considered a fresh or outside air inlet. In an embodiment, the second medium A2 is ram air drawn from a portion of a ram air circuit to be described in more detail below. Generally, the second medium A2 described herein is at an ambient pressure equal to an air pressure outside of the aircraft when the aircraft is on the ground and is between an ambient pressure and a cabin pressure when the aircraft is in flight. A conditioned form of the second medium A2 may be provided to the volume 24 during one or more modes of operation of the system 20.

The system 20 can further receive a third medium A3 at a third inlet 28. In one embodiment, the third medium A3 is cabin discharge or outflow air, which is air leaving the volume and that would typically be discharged overboard. In some embodiments, the system 20 is configured to extract work from the third medium A3. In this manner, the pressurized air A3 of the volume 24 can be utilized by the system 20 to achieve certain operations.

As shown, the environmental control system 20 includes a ram air circuit 30 including at least one heat exchanger. The ram air circuit 30 can receive and direct a medium, such as ram air for example, through a portion of the system 20. The one or more heat exchangers are devices built for efficient heat transfer from one medium to another. Examples of the type of heat exchangers that may be used, include, but are not limited to, double pipe, shell and tube, plate, plate and shell, adiabatic shell, plate fin, pillow plate, and fluid heat exchangers.

The one or more heat exchangers of the ram air circuit 30 may be referred to as ram heat exchangers. In accordance with the claims, the ram heat exchangers include a first or primary heat exchanger 32 and a second or secondary heat exchanger 34. Within the heat exchangers 32, 34, ram air, such as outside air for example, acts as a heat sink to cool a medium passing there through, for example the first medium A1 and/or the second medium A2. Although a ram air circuit 30 having only two heat exchangers 32, 34 is illustrated, it should be understood that embodiments having more than two heat exchangers are also contemplated herein.

The system 20 additionally includes at least one thermodynamic device 40, and in some embodiments includes a plurality of compression devices. Each thermodynamic device 40 is a mechanical device that includes components for performing thermodynamic work on a medium (e.g., extracts work from or applies work to the first medium A1, the second medium A2 by raising and/or lowering pressure and by raising and/or lowering temperature). Examples of a thermodynamic device 40 include an air cycle machine, a two-wheel air cycle machine, a three-wheel air cycle machine, a four-wheel air cycle machine, etc.

In accordance with the claims, the thermodynamic device 40 includes a compressor 42 and at least one turbine operably coupled by a shaft 44. A compressor 42 is a mechanical device configured to raise a pressure of a medium and can be driven by another mechanical device (e.g., a motor or a medium via a turbine). Examples of compressor types include centrifugal, diagonal or mixedflow, axial-flow, reciprocating, ionic liquid piston, rotary screw, rotary vane, scroll, diaphragm, air bubble, etc. In an embodiment, the thermodynamic device 40 includes two turbines 46, 48. A turbine, such as either turbines 46, 48 for example, is a mechanical device that expand a medium and extract work therefrom (also referred to as extracting energy) to drive the compressor 42 via the shaft 44.

The system 20 additionally includes a dehumidification system 50. In the illustrated, non-limiting embodiment, the dehumidification system 50 includes a condenser 52 and a water extractor 54 arranged downstream from the condenser 52. The condenser 52 and the water extractor 54 are arranged in fluid communication with the first medium A1, and in some embodiments, with both the first medium A1 and the second medium A2. The condenser 52 is a particular type of heat exchanger and the water collector 54 is a mechanical device that performs a process of removing water from a medium. In some embodiments, the dehumidification system 50 includes a reheater 56. It should be appreciated that the dehumidification system illustrated and described herein is intended as an example only, and that embodiments where the dehumidifcation system has another configuration are also contemplated herein.

The elements of the system 20 are connected via valves, tubes, pipes, and the like. For example, the inlet 22 of the first medium may be fluidly connected to an inlet of the second heat exchanger 34 via a conduit 60. An outlet 62 of the compressor 42 is fluidly coupled to the ram air circuit 30 via a conduit 64. In an embodiment, the conduit 64 separates into a parallel first branch 66 and second branch 68. The first branch 66 may be connected to an inlet of the first heat exchanger 32 and the second branch 68 may be connected to the ram air circuit 30 at a location downstream from the plurality of ram air heat exchangers 32, 34. In an embodiment, a conduit 70 fluidly connects the first conduit 60 associated with the first medium A1 to the first branch 66 of conduit 64. The conduit 70 may be fluidly connected to both the conduit 60 and the first branch 66 at a location upstream from the inlets of both the first heat exchanger 32 and the second heat exchanger 34.

A conduit 72 extending from an outlet of the first heat exchanger 32 may split into a parallel primary conduit 74 and a bypass conduit 76. As shown, a conduit 78 extending from the outlet of the second heat exchanger 34 may be fluidly coupled to the primary conduit 74 such that a flow output from the second heat exchanger 34 mixes with the flow output from the first heat exchanger 32 within the primary conduit 74. The primary conduit 74 is connected to the dehumidification system 50, such as to an inlet of first pass of a reheater 56 for example. In an embodiment, there is only a single flow path extending through the dehumidification system 50. As a result, the flow output from the dehumidification system 50, such as from an outlet of a second pass of the reheater 56 for example, is provided to an inlet of the first turbine 46. A conduit 80 extending from the outlet 82 of the first turbine 46 may be connected to an inlet of a condenser 52 of the dehumidification system. In an embodiment, a second bypass conduit 84 extends between and fluidly connects the conduit 60 to and the conduit extending from the outlet of the first turbine 46. The second bypass conduit 84 is connected to the conduit 60 at a location upstream from the inlet of the second heat exchanger 32. A flow of medium provided to the second bypass conduit 84 is configured to bypass the ram air circuit 30, the first turbine 46, and the majority of the flow through the dehumidification system 50, thereby adding heat to the flow of medium provided to the volume 24 via the outlet.

Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium in any portion of the system 20 can be regulated to a desired value. For instance, a first valve V1 may be configured to control a supply of the first medium A1 to the system 20, and a second valve V2 may be configured to control a supply of the third medium A3 to the system 20. In an embodiment, a third valve V3 is operable to control a flow of the second medium to the first heat exchanger 32, and a fourth valve V4 is operable to control a flow of the second medium exhausted into the ram air circuit 30. A fifth valve V5 may be operable to control a flow within the between the conduit 70 fluidly coupling the conduit 60 and the first branch 66. A sixth valve V6 may be arranged within the bypass conduit 76 and is operable to allow a flow output from the first heat exchanger 32 to bypass the remainder of the system 20 including the dehumidification system 50 and the first turbine 46. Similarly, a seventh valve V7 may be operable to control a flow provided to the second bypass conduit 84 and an eight valve V8 may be configured to fluidly couple or isolate the outlets of the first and second heat exchangers 32, 34.

With continued reference to the system of FIGS. 1-3, the system 20 is operable in a plurality of modes, selectable based on a flight condition of the aircraft. For example, the system 20 may be operable in a first, low altitude mode or a second, high altitude mode. The first, low altitude mode is typically used for ground and low altitude flight conditions, such as ground idle, taxi, take-off, and hold conditions, and the second, high altitude mode may be used at high altitude cruise, climb, and descent flight conditions.

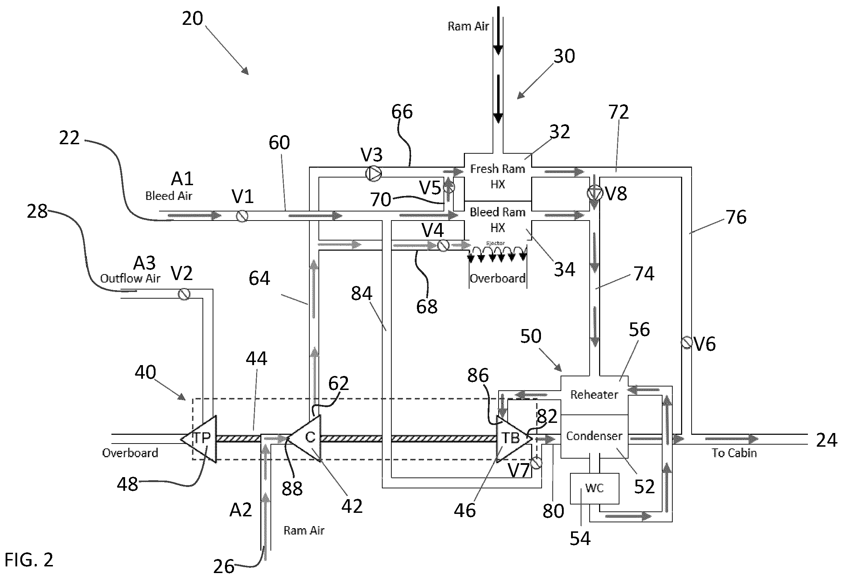

With reference to FIG. 2, during normal operation in the first, low altitude mode, valves V1, V4, V5, and V8 are open, and valves V2, V3, V6 and V7 are closed. As a result, a flow of high pressure first medium A1, such as bleed air drawn from an engine or APU, is provided to the system 20. Because valve V5 is open, the first conduit 60 is fluidly connected to both the first heat exchanger 32 and the second heat exchanger 34. Accordingly, a portion of the first medium A1 within the first conduit 60 is configured to pass through conduit 70 to the first branch 66 such that the first medium A1 is provided to both the first heat exchanger 32 and the second heat exchanger 34 in parallel. Within both the first heat exchanger 32 and the second heat exchanger 34, a flow of ram air acts as a heat sink, thereby cooling the first medium A1. However, because the second heat exchanger 34 is arranged downstream from the first heat exchanger 32 relative to the flow of ram air, the first medium A1 within the second heat exchanger 34 is cooled less than the first medium A1 within the first heat exchanger 32. Because valve V8 is open and valve V6 is closed, the first medium A1 output from both heat exchangers 32, 34 is directed toward the primary conduit 74 where the flows are mixed and provided to the dehumidification system 50.

The first medium A1 is configured to flow through a first pass of the reheater 56, the condenser 52, and the water extractor 54 sequentially. The first medium A1 is cooled and further cooled within the reheater 56 and the condenser 52, respectively, causing any moisture within the medium or mixed medium to condense. Moisture is then removed within the water extractor 54 and the first medium A1 is provided to a second pass of the reheater 56. Within this cold second pass of the reheater 56, the first medium A1 is partially heated to produce a warm, dry first medium A1. From the outlet of the reheater 56, the warm, dry first medium A1 is provided to an inlet 86 of the first turbine 46. The first medium A1 is expanded across the first turbine 46 and energy is extracted therefrom. The energy or work extracted by the first turbine 46 drives the compressor 42 via the shaft 44. The expanded first medium provided at the outlet of the turbine 44 is then provided to a second pass of the condenser 52, where the first medium A1 is heated prior to being delivered to one or more loads of the aircraft, such as the volume 24 for example.

At the same time, the second medium A2 is provided to an inlet 88 of a compressor 42 of the thermodynamic device 40. The act of compressing the second medium A2, heats the second medium A2 and increases the pressure of the second medium A2. Accordingly, the temperature and pressure of the compressed second medium A2 output from an outlet 62 of the compressor 42 is greater than the temperature and pressure of the second medium A2 provided to the inlet 88.

With the third valve V3 closed and the fourth valve V4 open, all of the compressed second medium A2 output from the compressor 42 is provided to the ram air circuit 30, such as at a location downstream from all of the plurality of heat exchangers within the ram air circuit 30. Accordingly, in the first mode, the compressor outlet 62 is only fluidly connected to the ram air circuit 30 at a location downstream from both the first and second heat exchangers 32, 34. Because of its pressure, the flow of the second medium A2 when provided to the ram air circuit 30 is configured to draw a flow of ram air into and through the circuit. Accordingly, the second medium A2 provided to ram air circuit 30 is similar to a motive flow of an ejector and the negative pressure generated by the flow of the second medium pulls the ram air across the plurality of heat exchangers 32, 34 before being mixed with the second medium A2. This mixture of second medium A2 and ram air may then be exhausted overboard.

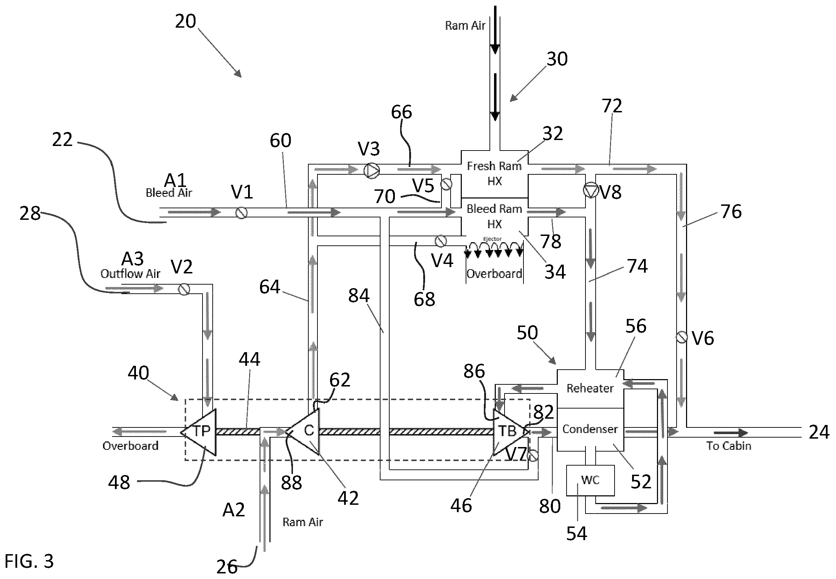

With reference now to FIG. 3, operation of the system 20 in a second, high-altitude mode is illustrated. During normal operation in the second mode, valves V1, V2, V3, and V6 are open, and valves V4, V5, V7, and V8 are closed. As a result, a flow of high pressure first medium A1, such as bleed air drawn from an engine or APU, is provided to the system 20. Because valve V5 is closed, the entire flow of first medium within the first conduit 60 is provided to the second heat exchanger 34. Said another way, in the second mode, the first conduit 60 is only fluidly connected to the inlet of the second heat exchanger 34. Within the second heat exchanger 34, a flow of ram air acts as a heat sink, thereby cooling the first medium A1. The cool first medium A1 output from the second heat exchanger 34 is then provided to the dehumidification system 50. During the second, mode of operation, the movement of the aircraft is sufficient to draw a flow of ram air through the ram air circuit. Accordingly, because the second medium A2 is operable to move ram air through the ram air circuit 30 in the first mode of operation and the movement of the aircraft itself is sufficient to move ram air through the ram air circuit 30 in the second mode of operation no fan need be associated with the ram air circuit. Accordingly, the thermodynamic device does not include a fan.

Within the dehumidification system 50, the first medium A1 is configured to flow through a first pass of the reheater 56, the condenser 52, and the water extractor 54 sequentially. The first medium A1 is cooled and further cooled within the reheater 56 and the condenser 52, respectively, causing any moisture within the medium or mixed medium to condense. Moisture is then removed within the water extractor 54 and the first medium A1 is provided to a second pass of the reheater 56. Within this cold second pass of the reheater 56, the first medium A1 is partially heated to produce a warm, dry first medium A1. From the outlet of the reheater 56, the warm, dry first medium A1 is provided to an inlet 86 of the turbine 46. The first medium A1 is expanded across the turbine 46 and work is extracted therefrom. The work extracted by the turbine 46 drives the compressor 42 via the shaft 44. The expanded first medium A1 provided at the outlet of the turbine 44 is then provided to a second pass of the condenser 52, where the first medium A1 is heated prior to being delivered to one or more loads of the aircraft, such as the volume 24 for example.

In the second mode of operation, the third medium A3 is provided to the second turbine 48. The third medium A3 is expanded across the second turbine 48 and work is extracted therefrom. The work extracted by the second turbine 48 drives the compressor 42 via the shaft 44. The expanded third medium A3 output from the second turbine 48 may be exhausted overboard or provided to another load of the aircraft.

At the same time, the second medium A2 is provided to an inlet 88 of a compressor 42 of the thermodynamic device 40. With the third valve V3 open and the fourth valve V4 closed, the entire flow of the compressed second medium A2 output from the compressor 42 is provided to the first heat exchanger 32. Within the first heat exchanger 32, a flow of ram air acts as a heat sink, thereby cooling the compressed second medium A2 to form a conditioned compressed second medium. It should be appreciated that in the illustrated, non-limiting embodiment, after cooling the second medium A2 within the first heat exchanger 32, the flow of ram air is provided to the second heat exchanger 34 to cool the flow of the first medium A1. Because the valve V8 is closed, and valve V6 is open the second medium output from the first heat exchanger 32 is provided to the bypass conduit 76. The second medium output from the bypass conduit is mixed with the first medium output from the condenser 52 at a location upstream from the one or more loads. Accordingly, in an embodiment, a mixture of both the first medium A1 and the second medium A2 is provided at the outlet of the system 20 to one or more loads.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the scope thereof Therefore, it is intended that the present disclosure not be limited to the particular embodiment disclosed as the best mode contemplated for carrying out this present disclosure, but that the present disclosure will include all embodiments falling within the scope of the claims.

## Claims

1. An environmental control system (20) of an aircraft comprising:
a plurality of inlets including a first inlet (22) for receiving a first medium (A1) and a second inlet (26) for receiving a second medium (A2);
a thermodynamic device (40) including a compressor (42) and at least one turbine (46, 48), the thermodynamic device (40) being fluidly coupled to the second inlet (26);
a ram air circuit (30) having a plurality of heat exchangers including a first heat exchanger (32) and a second heat exchanger (34), the ram air circuit (30) being fluidly coupled to both the first inlet (22) and the thermodynamic device (40); and
wherein the environmental control system (20) is operable in a plurality of modes including a first mode and a second mode, in the first mode, an outlet (62) of the thermodynamic device (40) is only fluidly connected to the ram air circuit (30) at a location downstream from both the first heat exchanger (32) and the second heat exchanger (34), wherein the flow of the second medium (A2), when provided to the ram air circuit (30), is configured to draw a flow of ram air into and through the ram air circuit (30), and in the second mode, the outlet (62) of the thermodynamic device (40) is fluidly connected to an inlet of one of the plurality of heat exchangers (32, 34), wherein the outlet (62) of the thermodynamic device (40) is the outlet (62) of the compressor (42).

2. The environmental control system (20) of claim 1, wherein in the first mode, only a conditioned first medium (A1) is provided to an outlet of the environmental control system (20).

3. The environmental control system (20) of claim 2, wherein in the second mode, a conditioned form of both the first medium (A1) and the second medium (A2) is provided to the outlet of the environmental control system (20).

4. The environmental control system (20) of any preceding claim, wherein in the first mode, the first inlet (22) is fluidly connected to an inlet of both the first heat exchanger (32) and the second heat exchanger (34).

5. The environmental control system (20) of claim 4, wherein in the first mode, the first medium (A1) output from the first heat exchanger (32) is mixed with the first medium (A1) output from the second heat exchanger (34).

6. The environmental control system (20) of any preceding claim, wherein in the second mode, the first inlet (22) is fluidly connected to only the inlet of the second heat exchanger (34).

7. The environmental control system (20) of any preceding claim, wherein the at least one turbine (46, 48) of the thermodynamic device (40) includes a first turbine (46) and a second turbine (48).

8. The environmental control system (20) of claim 7, wherein the first turbine (46) is fluidly connected to the second heat exchanger (34).

9. The environmental control system (20) of claim 7 or 8, wherein the plurality of inlets includes a third inlet (28) configured to receive a third medium (A3) and a third turbine is fluidly coupled to the third inlet (28).

10. The environmental control system (20) of any preceding claim, wherein the first mode is associated with operation of the aircraft when on the ground.

11. The environmental control system (20) of any preceding claim, wherein the second mode is associated with operation of the aircraft at altitude, and/or
wherein the first medium (A1) is bleed air and the second medium (A2) is outside air.

12. A method of operating an environmental control system (20) of an aircraft comprising:
providing a first medium (A1) to at least one of a first heat exchanger (32) and a second heat exchanger (34) of a ram air circuit (30);
extracting energy from the first medium (A1) to form an expanded first medium (A1);
delivering the expanded first medium (A1) to an outlet (62) associated with one or more loads of the aircraft; and
compressing a second medium (A2) at a compressor (42) to form a compressed second medium (A2), wherein the energy extracted from the first medium (A1) is used to drive the compressor (42); wherein
in a first mode of operation drawing a flow of ram air through the ram air circuit (30) using the compressed second medium (A2), wherein all of the compressed second medium output from the compressor (42) is provided to the ram air circuit (30) at a location downstream from the first heat exchanger (32) and the second heat exchanger (34); and
in a second mode of operation, conditioning the compressed second medium (A2) to form a conditioned compressed second medium (A2) deliverable to the outlet (62), wherein the outlet is fluidly connected to an inlet of one of the plurality of heat exchangers (32, 34).

13. The method of claim 12, wherein in the first mode of operation, the first medium (A1) is provided to the first heat exchanger (32) and the second heat exchanger (34) of the ram air circuit (30).

14. The method of claim 13, wherein in the first mode of operation, the first medium (A1) is provided to the first heat exchanger (32) and the second heat exchanger (34) in parallel, and/or
wherein in the second mode of operation, the first medium (A1) is provided to only the second heat exchanger (34) of the ram air circuit (30).

15. The method of any of claims 12 to 14, wherein in the second mode of operation, further comprising extracting energy from a third medium (A3), wherein the energy extracted from the third medium (A3) is used to drive the compressor (62).

## Patentansprüche

1. Umgebungskontrollsystem (20) eines Luftfahrzeugs, umfassend:
eine Vielzahl von Einlässen, die einen ersten Einlass (22) zum Aufnehmen eines ersten Mediums (A1) und einen zweiten Einlass (26) zum Aufnehmen eines zweiten Mediums (A2) beinhaltet;
eine thermodynamische Vorrichtung (40), die einen Kompressor (42) und mindestens eine Turbine (46, 48) beinhaltet, wobei die thermodynamische Vorrichtung (40) mit dem zweiten Einlass (26) fluidisch gekoppelt ist;
einen Stauluftkreislauf (30), der eine Vielzahl von Wärmetauschern aufweist, die einen ersten Wärmetauscher (32) und einen zweiten Wärmetauscher (34) beinhaltet, wobei der Stauluftkreislauf (30) sowohl mit dem ersten Einlass (22) als auch mit der thermodynamischen Vorrichtung (40) fluidisch gekoppelt ist; und
wobei das Umgebungskontrollsystem (20) in einer Vielzahl von Modi, die einen ersten Modus und einen zweiten Modus beinhaltet, betrieben werden kann, in dem ersten Modus ein Auslass (62) der thermodynamischen Vorrichtung (40) nur an einer Stelle stromabwärts sowohl des ersten Wärmetauschers (32) als auch des zweiten Wärmetauschers (34) mit dem Stauluftkreislauf (30) fluidisch verbunden ist, wobei der Strom des zweiten Mediums (A2), wenn er dem Stauluftkreislauf (30) bereitgestellt wird, dazu konfiguriert ist, einen Stauluftstrom in und durch den Stauluftkreislauf (30) zu ziehen und in dem zweiten Modus der Auslass (62) der thermodynamischen Vorrichtung (40) mit einem Einlass eines oder mehrerer der Vielzahl von Wärmetauschern (32, 34) fluidisch verbunden ist, wobei der Auslass (62) der thermodynamischen Vorrichtung (40) der Auslass (62) des Kompressors (42) ist.

2. Umgebungskontrollsystem (20) nach Anspruch 1, wobei in dem ersten Modus nur ein konditioniertes erstes Medium (A1) einem Auslass des Umgebungskontrollsystems (20) bereitgestellt ist.

3. Umgebungskontrollsystem (20) nach Anspruch 2, wobei in dem zweiten Modus eine konditionierte Form sowohl des ersten Mediums (A1) als auch des zweiten Mediums (A2) dem Auslass des Umgebungskontrollsystems (20) bereitgestellt ist.

4. Umgebungskontrollsystem (20) nach einem der vorhergehenden Ansprüche, wobei in dem ersten Modus der erste Einlass (22) mit einem Einlass sowohl des ersten Wärmetauschers (32) als auch des zweiten Wärmetauschers (34) fluidisch verbunden ist.

5. Umgebungskontrollsystem (20) nach Anspruch 4, wobei in dem ersten Modus das aus dem ersten Wärmetauscher (32) ausgegebene erste Medium (A1) mit dem aus dem zweiten Wärmetauscher (34) ausgegebenen ersten Medium (A1) vermischt wird.

6. Umgebungskontrollsystem (20) nach einem der vorhergehenden Ansprüche, wobei in dem zweiten Modus der erste Einlass (22) nur mit dem Einlass des zweiten Wärmetauschers (34) fluidisch verbunden ist.

7. Umgebungskontrollsystem (20) nach einem der vorhergehenden Ansprüche, wobei die mindestens eine Turbine (46, 48) der thermodynamischen Vorrichtung (40) eine erste Turbine (46) und eine zweite Turbine (48) beinhaltet.

8. Umgebungskontrollsystem (20) nach Anspruch 7, wobei die erste Turbine (46) mit dem zweiten Wärmetauscher (34) fluidisch verbunden ist.

9. Umgebungskontrollsystem (20) nach Anspruch 7 oder 8, wobei die Vielzahl von Einlässen einen dritten Einlass (28) beinhaltet, der dazu konfiguriert ist, ein drittes Medium (A3) aufzunehmen, und eine dritte Turbine mit dem dritten Einlass (28) fluidisch gekoppelt ist.

10. Umgebungskontrollsystem (20) nach einem der vorhergehenden Ansprüche, wobei der erste Modus mit dem Betrieb des Luftfahrzeugs am Boden verknüpft ist.

11. Umgebungskontrollsystem (20) nach einem der vorhergehenden Ansprüche, wobei der zweite Modus mit dem Betrieb des Luftfahrzeugs in der Höhe verknüpft ist, und/oder wobei das erste Medium (A1) Zapfluft ist und das zweite Medium (A2) Außenluft ist.

12. Verfahren zum Betreiben eines Umgebungskontrollsystems (20) eines Luftfahrzeugs, umfassend:
Bereitstellen eines ersten Mediums (A1) an mindestens einen von einem ersten Wärmetauscher (32) und einem zweiten Wärmetauscher (34) eines Stauluftkreislaufs (30);
Entnehmen von Energie aus dem ersten Medium (A1), um ein expandiertes ersten Mediums (A1) auszubilden;
Zuführen des expandierten ersten Mediums (A1) zu einem Auslass (62), der mit einer oder mehreren Ladungen des Luftfahrzeugs verknüpft ist; und
Komprimieren eines zweiten Mediums (A2) an einem Kompressor (42), um ein komprimiertes zweites Medium (A2) auszubilden, wobei die aus dem ersten Medium (A1) entnommene Energie verwendet wird, um den Kompressor (42) anzutreiben; wobei
in einem ersten Betriebsmodus, ein Stauluftstrom durch den Stauluftkreislauf (30) unter Verwendung des komprimierten zweiten Mediums (A2) gezogen wird, wobei das gesamte von dem Kompressor (42) ausgegebene komprimierte zweite Medium dem Stauluftkreislauf (30) an einer Stelle stromabwärts des ersten Wärmetauschers (32) und des zweiten Wärmetauschers (34) bereitgestellt wird; und
in einem zweiten Betriebsmodus das komprimierte zweite Medium (A2) dazu konditioniert wird, ein konditioniertes komprimiertes zweites Medium (A2) auszubilden, das dem Auslass (62) zugeführt werden kann, wobei der Auslass mit einem Einlass eines der Vielzahl von Wärmetauschern (32, 34) fluidisch verbunden ist.

13. Verfahren nach Anspruch 12, wobei in dem ersten Betriebsmodus das erste Medium (A1) dem ersten Wärmetauscher (32) und dem zweiten Wärmetauscher (34) des Stauluftkreislaufs (30) bereitgestellt ist.

14. Verfahren nach Anspruch 13, wobei in dem ersten Betriebsmodus das erste Medium (A1) dem ersten Wärmetauscher (32) und dem zweiten Wärmetauscher (34) parallel bereitgestellt ist und/oder
wobei in dem zweiten Betriebsmodus das erste Medium (A1) nur dem zweiten Wärmetauscher (34) des Stauluftkreislaufs (30) bereitgestellt ist.

15. Verfahren nach einem der Ansprüche 12 bis 14, wobei in dem zweiten Betriebsmodus ferner Entnehmen von Energie aus einem dritten Medium (A3) umfasst ist, wobei die aus dem dritten Medium (A3) entnommene Energie verwendet wird, um den Kompressor (62) anzutreiben.

## Revendications

1. Système de contrôle environnemental (20) d'un aéronef comprenant :
une pluralité d'entrées incluant une première entrée (22) pour recevoir un premier milieu (A1) et une deuxième entrée (26) pour recevoir un deuxième milieu (A2) ;
un dispositif thermodynamique (40) incluant un compresseur (42) et au moins une turbine (46, 48), le dispositif thermodynamique (40) étant accouplé fluidiquement à la deuxième entrée (26) ;
un circuit d'air dynamique (30) ayant une pluralité d'échangeurs de chaleur incluant un premier échangeur de chaleur (32) et un second échangeur de chaleur (34), le circuit d'air dynamique (30) étant accouplé fluidiquement à la fois à la première entrée (22) et au dispositif thermodynamique (40) ; et
dans lequel le système de contrôle environnemental (20) peut fonctionner dans une pluralité de modes incluant un premier mode et un second mode, dans le premier mode, une sortie (62) du dispositif thermodynamique (40) est uniquement reliée fluidiquement au circuit d'air dynamique (30) à un emplacement en aval à la fois du premier échangeur de chaleur (32) et du second échangeur de chaleur (34), dans lequel le flux du deuxième milieu (A2), lorsqu'il est fourni au circuit d'air dynamique (30), est configuré pour aspirer un flux d'air dynamique à l'intérieur et au travers du circuit d'air dynamique (30), et dans le second mode, la sortie (62) du dispositif thermodynamique (40) est reliée fluidiquement à une entrée de l'un parmi la pluralité d'échangeurs de chaleur (32, 34), dans lequel la sortie (62) du dispositif thermodynamique (40) est la sortie (62) du compresseur (42).

2. Système de contrôle environnemental (20) selon la revendication 1, dans lequel, dans le premier mode, seul un premier milieu conditionné (A1) est fourni à une sortie du système de contrôle environnemental (20).

3. Système de contrôle environnemental (20) selon la revendication 2, dans lequel, dans le second mode, une forme conditionnée à la fois du premier milieu (A1) et du deuxième milieu (A2) est fournie à la sortie du système de contrôle environnemental (20).

4. Système de contrôle environnemental (20) selon une quelconque revendication précédente, dans lequel, dans le premier mode, la première entrée (22) est reliée fluidiquement à une entrée à la fois du premier échangeur de chaleur (32) et du second échangeur de chaleur (34).

5. Système de contrôle environnemental (20) selon la revendication 4, dans lequel, dans le premier mode, le premier milieu (A1) sortant du premier échangeur de chaleur (32) est mélangé au premier milieu (A1) sortant du second échangeur de chaleur (34).

6. Système de contrôle environnemental (20) selon une quelconque revendication précédente, dans lequel, dans le second mode, la première entrée (22) est reliée fluidiquement uniquement à l'entrée du second échangeur de chaleur (34).

7. Système de contrôle environnemental (20) selon une quelconque revendication précédente, dans lequel l'au moins une turbine (46, 48) du dispositif thermodynamique (40) inclut une première turbine (46) et une deuxième turbine (48).

8. Système de contrôle environnemental (20) selon la revendication 7, dans lequel la première turbine (46) est reliée fluidiquement au second échangeur de chaleur (34).

9. Système de contrôle environnemental (20) selon la revendication 7 ou 8, dans lequel la pluralité d'entrées inclut une troisième entrée (28) configurée pour recevoir un troisième milieu (A3) et une troisième turbine est accouplée fluidiquement à la troisième entrée (28).

10. Système de contrôle environnemental (20) selon une quelconque revendication précédente, dans lequel le premier mode est associé au fonctionnement de l'aéronef lorsqu'il se trouve au sol.

11. Système de contrôle environnemental (20) selon une quelconque revendication précédente, dans lequel le second mode est associé au fonctionnement de l'aéronef en altitude, et/ou dans lequel le premier milieu (A1) est de l'air de prélèvement et le deuxième milieu (A2) est de l'air extérieur.

12. Procédé de fonctionnement d'un système de contrôle environnemental (20) d'un aéronef comprenant :
la fourniture d'un premier milieu (A1) à au moins l'un parmi un premier échangeur de chaleur (32) et un second échangeur de chaleur (34) d'un circuit d'air dynamique (30) ;
l'extraction de l'énergie du premier milieu (A1) pour former un premier milieu (A1) ayant subi une détente ;
l'acheminement du premier milieu (A1) ayant subi une détente vers une sortie (62) associée à une ou plusieurs charges de l'aéronef ; et
la compression d'un deuxième milieu (A2) au niveau d'un compresseur (42) pour former un deuxième milieu (A2) comprimé, dans lequel l'énergie extraite du premier milieu (A1) est utilisée pour entraîner le compresseur (42) ; dans lequel
l'aspiration, dans un premier mode de fonctionnement, d'un flux d'air dynamique à travers le circuit d'air dynamique (30) en utilisant le deuxième milieu (A2) comprimé, dans lequel la totalité du deuxième milieu comprimé sortant du compresseur (42) est fournie au circuit d'air dynamique (30) à un emplacement en aval du premier échangeur de chaleur (32) et du second échangeur de chaleur (34) ; et
le conditionnement, dans un second mode de fonctionnement, du deuxième milieu comprimé (A2) pour former un deuxième milieu comprimé conditionné (A2) pouvant être acheminé à la sortie (62), dans lequel la sortie est reliée fluidiquement à une entrée de l'un parmi la pluralité d'échangeurs de chaleur (32, 34).

13. Procédé selon la revendication 12, dans lequel, dans le premier mode de fonctionnement, le premier milieu (A1) est fourni au premier échangeur de chaleur (32) et au second échangeur de chaleur (34) du circuit d'air dynamique (30).

14. Procédé selon la revendication 13, dans lequel, dans le premier mode de fonctionnement, le premier milieu (A1) est fourni au premier échangeur de chaleur (32) et au second échangeur de chaleur (34) en parallèle, et/ou
dans lequel, dans le second mode de fonctionnement, le premier milieu (A1) est fourni uniquement au second échangeur de chaleur (34) du circuit d'air dynamique (30).

15. Procédé selon l'une quelconque des revendications 12 à 14, dans lequel, dans le second mode de fonctionnement, celui-ci comprend en outre l'extraction de l'énergie d'un troisième milieu (A3), dans lequel l'énergie extraite du troisième milieu (A3) est utilisée pour entraîner le compresseur (62).
